# EUROPÄISCHE PATENTSCHRIFT

(11) **EP 1 322 720 B1**
(45) Veröffentlichungstag und Bekanntmachung des Hinweises auf die Patenterteilung: **04.07.2007**
(21) Anmeldenummer: 01974229.5
(22) Anmeldetag: 06.09.2001
(51) Int. Cl.: C09J 111/02, C08F 36/18

(54) **KLEBSTOFFZUSAMMENSETZUNG AUF BASIS VON POLYCHLOROPREN-DISPERSIONEN**
ADHESIVE COMPOSITION BASED ON POLYCHLOROPRENE DISPERSIONS
COMPOSITION D'ADHESIF A BASE DE DISPERSIONS DE POLYCHLOROPRENE

(30) Priorität: 19.09.2000 DE 10046545
(43) Veröffentlichungstag der Anmeldung: 02.07.2003
(73) Patentinhaber: Bayer MaterialScience AG, 51368 Leverkusen (DE)
(72) Erfinder: MUSCH, Rüdiger, 51467 Bergisch Gladbach (DE); PANSKUS, Knut, 51375 Leverkusen (DE); SCHILDAN, Norbert, 51065 Köln (DE)
(86) Internationale Anmeldenummer: PCT/EP2001/010275
(87) Internationale Veröffentlichungsnummer: WO 2002/024825

(56) Entgegenhaltungen:
- EP-A- 0 535 460
- WO-A-94/13703
- US-A- 5 527 846

## Beschreibung

Die Erfindung betrifft Klebstoffzusammensetzung auf Basis von Polychloropren-Dispersionen mit verbesserten Haftklebeeigenschaften, ein Verfahren zu deren Herstellung und deren Verwendung als Kontakthaftkleber für anorganische oder organische Substrate.

Die Polychloroprenherstellung ist seit langem bekannt, sie erfolgt durch Emulsionspolymerisation im alkalischen wässrigen Medium, vgl. "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York 1965; "Methoden der Organischen Chemie" (Houben-Weyl) XIV/1, 738 f. Georg Thieme Verlag Stuttgart 1961.

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium- und Ammoniumsalze von langkettigen Fettsäuren, Kolophonium und Kolophoniumderivate, höhermolekulare Alkoholsulfate, Arylsulfonsäuren, Formaldehydkondensate von Arylsulfonsäuren, nichtionische Emulgatoren auf Polyethylenoxid- und Polypropylenoxidbasis sowie emulgierend wirkende Polymere, wie Polyvinylalkohol (DE-A 2 307 811, DE-A 2 426 012, DE-A 2 514 666, DE-A 2 527 320, DE-A 2 755 074, DE-A 3 246 748, DE-A 1 271 405, 1 301 502, US-P 2 234 215, JP-A 60-31 510 (= 58-136 824 vom 28.07.1983)).

Polychloropren wird entweder nach entsprechender Compoundierung und Vulkanisation zur Herstellung von technischen Gummiartikeln verwendet, oder es wird als Kontaktklebstoffrohstoff eingesetzt ("Handbook of adhesives", Kapitel 21, Verlag Van Nostrand Reinhold, New York, 2. Auflage 1977).

Kontaktklebstoffe auf Basis von Polychloropren sind überwiegend lösemittelhaltige Klebstoffe, die man auf beide zu verbindenden Teile aufbringt und trocknen lässt. Durch anschließendes Fügen beider Teile unter Druck erhält man eine Verbindung mit hoher Festigkeit. Bei diesen lösemittelhaltigen Kontaktklebstoffen wird der lange Zeitraum innerhalb dem eine Verklebung bei Raumtemperatur möglich ist ("offene Zeit") als besonders vorteilhaft angesehen.

Aus ökologischen und ökonomischen Gründen besteht ein wachsender Bedarf an geeigneten wässrigen Polychloropren-Dispersionen, die sich zu entsprechenden wässrigen Klebstoff-Formulierungen verarbeiten lassen. Nachteilig ist hier jedoch, dass nach dem Verdampfen des Wassers die "offene Zeit" - im Vergleich zu lösemittelhaltigen Klebstoffen - deutlich kürzer ist. Besonders bei Zusatz von hochschmelzenden Harzen, die die Wärmebeständigkeit der Verklebungen erhöhen, ist eine gute reproduzierbare Kontaktierung der zu verklebenden Substrate, insbesondere im Falle von schlecht oder nichtsaugenden Substraten, nur durch vorherige Thermoaktivierung des trockenen Klebstoff-Films zu erreichen (H.W. Lucas, in "Adhesives Age" 1992, Heft 2, S. 28).

"Offene Zeit" ist in der vorliegenden Anmeldung definiert als der zeitliche Abstand zwischen jenem Zeitpunkt an dem der aufgebrachte Klebstoff genügend trocken ist, um die Verklebung der Substrate zu gestatten und jenem Zeitpunkt, an dem es nicht mehr möglich ist alleine durch Druckanwendung bei Raumtemperatur eine befriedigende Bindung zu erzielen.

Aufgabe war es daher, eine wässrige Klebstoffzusammensetzung auf Basis einer wässrigen Polychloropren-Dispersion bereitzustellen, welche nach dem Verdampfen des Wassers eine lange "offene Zeit" besitzt, in der ohne Thermoaktivierung bei Raumtemperatur eine Verklebung möglich ist. Durch Zusatz eines hochschmelzenden Harzes zur Klebstoffzusammensetzung kann darüber hinaus eine Verbesserung hinsichtlich der Wärmebeständigkeit des Kontakthaftklebers erreicht werden.

Die Lösung der Aufgabe wurde durch die Herstellung einer wässrigen Klebstoffzusammensetzung auf Basis von Polychloropren-Dispersionen, erhältlich durch kontinuierliche Polymerisation von Chloropren in wässriger Emulsion in Gegenwart von unmodifizierten Harzsäuren als Emulgator, erreicht. Diese wässrige Klebstoff rohstoff-Dispersion kann dann mit denen im Stand der Technik bekannten Klebstoffhilfs- und Zusatzmitteln zu einer Klebstoffzusammensetzung verarbeitet werden, die über eine ausreichend lange "offene Zeit" verfügt, in der ohne Thermoaktivierung bei Raumtemperatur eine Verklebung möglich ist.

Gegenstand der Erfindung sind somit Klebstoffzusammensetzungen auf Basis einer Polychloropren-Dispersion enthaltend eine unmodifizierte tricyclische Diterpencarbonsäure mit mindestens zwei konjugierten C=C-Doppelbindungen pro Molekül.

Bevorzugt sind Klebstoffzusammensetzungen enthaltend 100 Gew.-Teile einer Polychloroprendispersion, welche als Emulgator eine tricyc1ischen Diterpencarbonsäure mit mindestens zwei konjugierten C=C-Doppelbindungen pro Molekül enthält, 15 bis 75 Gew.-Teile eines Klebharzes, 1 bis 10 Teile eines Metalloxids, ausgewählt aus der Gruppe bestehend aus Zinkoxid und Magnesiumoxid sowie gegebenenfalls weitere Hilfs- und Zusatzstoffe, die alle in Form einer Dispersion vorliegen.

Weiterer Gegenstand der Erfindung ist ein Verfahren zur Herstellung einer Klebstoffzusammensetzung durch Mischen einer Polychloropren-Dispersion mit den üblichen Klebstoffhilfs- und Zusatzmitteln, dadurch gekennzeichnet, dass die Polychloropren-Dispersion eine tricyclischen Diterpencarbonsäure mit mindestens zwei konjugierten C=C-Doppelbindungen pro Molekül enthält.

Die in der erfindungsgemäßen Klebstoffzusammensetzung enthaltenden Polychloropren-Dispersion wird durch Emulsionspolymerisation von Chloropren und 2 bis 20 Gew.-Teile eines mit Chloropren copolymerisierbaren ethylenisch ungesättigten Monomeren in alkalischem Medium in Gegenwart von 1 bis 10 Gew.-Teile einer tricyclischen Diterpencarbonsäure mit mindestens zwei konjugierten C=C-Doppelbindungen pro Molekül als Emulgator, alle Angaben bezogen auf 100 Gew.-Teile beider Monomere erhalten.

Die in der erfindungsgemäßen Klebstoffzusammensetzung enthaltene Polychloropren-Dispersion weist nach Verdampfen des Wassers eine "offene Zeit" im Bereich von 4 bis 15 Tagen auf.

Geeignete copolymerisierbare Monomere werden z. B. beschrieben in "Methoden der Organischen Chemie" (Houben-Weyl) XIV/l, 738 f. Georg Thieme Verlag Stuttgart 1961. Bevorzugt sind Verbindungen mit 3 bis 12 C-Atomen und 1 oder 2 copolymerisierbaren C=C-Doppelbindungen pro Molekül. Beispiele bevorzugter copolymerisierbarer Monomere sind 2,3-Dichlorbutadien und 1-Chlorbutadien.

Die im erfindungsgemäßen Verfahren einzusetzende Polychloropren-Dispersion wird durch Emulsionspolymerisation bei 0 bis 70°C, vorzugsweise bei 5 bis 50°C, und bei pH-Werten von 10 bis 14, vorzugsweise 11 bis 13 hergestellt. Die Aktivierung erfolgt durch die üblichen Aktivatoren bzw. Aktivatorsysteme.

Als Beispiele seien genannt: Formamidinsulfonsäure, Kaliumperoxodisulfat, Redoxsysteme auf Basis von Kaliumperoxodisulfat und gegebenenfalls Silbersalz (Na-Salz der Anthrachinon-β-sulfonsäure) wobei beispielsweise Verbindungen wie Formamidinsulfinsäure, Na-Salz der Hydroxymethansulfinsäure, Natriumsulfit und Natriumdithionit als Redoxpartner dienen. Auch Redoxsysteme auf Basis von Peroxiden und Hydroperoxiden sind geeignet. Die Herstellung der erfindungsgemäßen Polychloroprene kann sowohl kontinuierlich als auch diskontinuierlich erfolgen.

Zur Viskositätseinstellung der erfindungsgemäßen Polychloroprene können übliche Kettenübertragungsmittel wie Mercaptane, wie sie z.B. in DE-A 3 002 711, GB-PS 1 048 235, FR-PS 2 073 106 beschrieben sind, oder wie Xanthogendisulfide, wie sie z.B. in DE-A 1 186 215, in den DE-A 2 156 453, 2 306 610 und 3 044 811, in der EP-A 53 319, in den GB-PS 512 458 und 952 156 und in den US-A 2 321 693 und 2 567 117 beschrieben sind, verwendet werden.

Besonders bevorzugte Kettenübertragungsmittel sind n-Dodecylmercaptan und die in DE-A 3 044 811, DE-A 2 306 610 und DE-A 2 156 453 verwendeten Xanthogendisulfide.

Nach Durchführung der Polymerisation bis zum gewünschten Umsatz, der üblicherweise bei löslichem Polychloropren zwischen 50 und 80 % und bei Polychloropren-Gel über 80 % liegt, ist es vorteilhaft, die Reaktion durch Zugabe bekannter Abstoppmittel wie tert.-Butylbrenzkatechin, Phenothiazin und Diethylhydroxylamin abzubrechen. Nicht umgesetzte Monomere können mit Hilfe von Dampf und Vakuum entfernt werden.

In einer bevorzugten Ausführungsform des erfindungsgemäßen Verfahrens wird bei der Herstellung der Polychloropren-Dispersion durch Emulsionspolymerisation Chloropren mit 5 bis 9 Gew.-Teile 2,3-Dichlorbutadien in Gegenwart von 2,0 bis 6,0 Gew.-Teile einer tricyclischen Diterpencarbonsäure mit mindestens zwei konjugierten C=C-Doppelbindungen pro Molekül als Emulgator, alle Angaben bezogen auf eingesetzte polymerisierbare Monomere, umgesetzt.

Die erfindungsgemäß einzusetzenden tricyclischen Diterpencarbonsäuren können in Form der rohen, unmodifizierten Harzsäuren (S.W. Barendrecht, L.T. Lees in Ullmanns Encyclopädie der Technischen Chemie, 4. Aufl. Bd. 12. 528-538, Verlag Chemie, Weinheim - New York 1976), die aus Tallöl, Kiefernbalsam oder Wurzelharz gewonnen werden, verwendet werden, sofern diese frei von destillierbaren Bestandteilen des Terpentinöls sind.

Wenn die tricyclischen Diterpencarbonsäuren selbst leicht zugänglich sind, können sie auch in reiner Form eingesetzt werden.

Geeignete tricyclische Diterpencarbonsäuren umfassen beispielsweise Abietinsäure, Palustrinsäure, Neoabietinsäure und Lävopimarsäure.

Die tricyclischen, konjugiert ungesättigten Diterpencarbonsäuren können aus einem Gemisch von Harzsäuren nach Art und Menge durch Gaschromatographie bestimmt werden; beispielsweise gemäß oder analog J. Amer. Oil Chem. Soc. 54, 289 (1977).

Wird eine aus Tallöl, Kiefernbalsam oder Wurzelharz gewonnene, unmodifizierte Harzsäure eingesetzt, enthält diese naturgemäß nicht nur tricyclische, konjugiert ungesättigte Diterpencarbonsäuren, sondern auch weitere Bestandteile. Ohne einschränkend zu sein, kann als Beispiel für geeignete, kommerziell verfügbare unmodifizierte Harzsäuren, die wie folgt zusammengesetzte, aus Tallöl gewonnene Harzsäure genannt werden:

| | Anteil in % |
|---|---|
| Abietinsäure | 40 |
| Neoabietinsäure | 4 |
| Palustrinsäure | 7 |
| Pimarsäure | 3 |
| Isopimarsäure | 6 |
| Dehydroabietinsäure | 23 |
| andere Resinsäuren | 12 |
| Summe aller Harzsäuren | 95 |
| Fettsäuren | 2 |
| kombinierte Säuren | 1 |
| unverseifbare Anteile | 2 |
| (aus der Firmenschrift der Fa. Bergvik Kemi AB, Söderhamn, Schweden) | |

Als weiteres Beispiel sei die Zusammensetzung einer aus Kiefernbalsam gewonnenen unmodifizierten Harzsäure genannt:

| | Anteil in % |
|---|---|
| Abietinsäure | 46 |
| Neoabietinsäure | 16 |
| Palustrinsäure | 18 |
| Pimarsäure | 8 |
| Isopimarsäure | 1 |
| andere Resinsäuren | 10 |

Neben den tricyclischen, konjugiert ungesättigten Diterpencarbonsäuren können zusätzlich auch weitere emulgierende Substanzen eingesetzt werden, wie z.B. das wasserlösliche Salz des Kondensationsproduktes aus Naphthalinsulfonsäure und Formaldehyd.

Die erfindungsgemäße Klebstoffzusammensetzung ist frei von, oder arm an organischen Lösungsmitteln. In diesem Zusammenhang bedeutet "arm" einen Gehalt von weniger als 30 Gew.-% (organisches Lösungsmittel), bezogen auf den fertigen Klebstoff.

Die erfindungsgemäße Klebstoffzusammensetzung enthält neben der Polychloropren-Dispersion gegebenenfalls weitere Klebstoffhilfs- und Zusatzmittel. Beispielsweise können Füllstoffe wie Quarzmehl, Quarzsand, hochdisperse Kieselsäure, Schwerspat, Caiciumcarbonat, Kreide, Dolomit oder Talkum, gegebenenfalls zusammen mit Netzmitteln, beispielsweise Polyphosphaten (wie Natriumhexametaphosphat), Naphthalinsulfonsäure, Ammonium- oder Natriumpolyacrylsäuresalze, zugesetzt werden, wobei die Füllstoffe im allgemeinen in Mengen von 10 bis 60 %, vorzugsweise von 20 bis 50 Gew.-%, bezogen auf Klebstoff, und die Netzmittel im allgemeinen in Mengen von 0,2 bis 0,6 Gew.-%, bezogen auf Füllstoff, zugesetzt werden.

Besondere Bedeutung als Zusatzmittel hat Zinkoxid als Akzeptor für geringe Mengen von Chlorwasserstoff, der von den Polymerisaten abgespalten werden kann.

Weitere geeignete Hilfsmittel sind beispielsweise in Mengen von 0,01 bis 1 Gew.-%, bezogen auf Klebstoff, einzusetzende organische Verdickungsmittel, wie Cellulosederivate, Alginate, Stärke, Stärkederivate oder Polyacrylsäure oder in Mengen von 0,05 bis 5 Gew.-%, bezogen auf Klebstoff, einzusetzende anorganische Verdickungsmittel, wie beispielsweise Bentonite.

Zur Konservierung können der erfindungsgemäßen Klebstoffzusammensetzung auch Fungizide zugesetzt werden. Diese kommen im allgemeinen in Mengen von 0,02 bis 1,0 Gew.-%, bezogen auf Klebstoff, zum Einsatz. Geeignete Fungizide sind beispielsweise Phenol- und Kresolderivate oder zinnorganische Verbindungen.

Auch klebrigmachende Harze, wie z.B. unmodifizierte oder modifizierte Naturharze wie Kollophoniumester, Kohlenwasserstoffharze oder synthetische Harze wie Phthalatharze können der Klebstoffzusammensetzung in dispergierter Form gegebenenfalls zugesetzt werden, vgl. "Klebharze" R. Jordan, R. Hinterwaldner, S. 75-115, Hinterwaldner Verlag München 1994. Bevorzugt sind Alkylphenolharz-Dispersionen mit Erweichungspunkten größer 110°C, besonders bevorzugt ist ein Terpenphenolharz mit einem Erweichungspunkt über 110°C. Derartige Additive sind auch aus der US-A 5 527 846 bekannt und dort insbesondere in Spalte 4, Zeile 50 bis Spalte 5, Zeile 4 als die Klebeigenschaften von auf Polychloropren-Homopolymeren basierenden Klebstoffen modifizierende Additive beschrieben.

Organische Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphatbasis können gegebenenfalls den Polychloropren-Dispersionen zugesetzt werden.

Die erfindungsgemäßen Klebstoffe können zum Verkleben beliebiger Substrate gleicher oder verschiedener Art, z.B. von Holz, Papier, Kunststoffen, Textilien, Leder, Gummi und anorganischen Materialien, wie Keramik, Steingut oder Asbestzement verwendet werden.

Die erfindungsgemäße wässrige Klebstoffzusammensetzung ermöglicht darüber hinaus eine Verklebung von schwer zu verklebenden Substraten wie z.B. thermoplastische Olefine (TPO), oder Ethylen-Vinylacetat Copolymerisate (EVA) mit hohem Ethylengehalt, die ansonsten ohne Vorbehandlung der Oberfläche durch einen Primer nicht verklebbar sind. Als schwer zu verklebende Substrate versteht man Materialien mit einer Oberflächenspannung kleiner 35 mN/m. Die Bestimmung dieser Oberflächenspannung ist beispielsweise beschrieben in "Handbook of adhesives", Kapitel 1, S. 12, Verlag Van Nostrand Reinhold, New York, 2. Auflage 1977, oder in "Strukturelles Kleben und Dichten", Schindel-Bidinelli, Bd.1, S. 191, Hinterwaldner Verlag, München 1988.

### Beispiele

### A) Herstellung der Polychloropren-Dispersionen

Die Polymerisation erfolgt durch einen Konti-Prozess, wie er in der EP-A 0 032 977 beschrieben ist.

### Beispiel 1 (Vergleichsbeispiel)

In den ersten Reaktor einer Polymerisationskaskade, bestehend aus 7 gleichen Reaktoren mit einem Volumen von je 50 Liter werden die wässrige Phase (W) und die Monomerphase (M) über eine Mess- und Regelapparatur in stets konstantem Verhältnis sowie die Aktivatorphase (A) eingefahren. Die mittlere Verweilzeit je Kessel beträgt 25 Minuten. Die Reaktoren entsprechen denen in der DE-A 2 650 714 beschriebenen (Angaben in Gew.-Teilen pro 100 g Gew.-Teile eingesetzte Monomere).

| (M) = Monomerphase: | |
|---|---|
| Chloropren | 93,0 Gew.-Teile |
| 2,3-Dichlorbutadien-(1,3) | 7,0 Gew.-Teile |
| n-Dodecylmercaptan | 0,22 Gew.-Teile |
| Phenothiazin | 0,015 Gew.-Teile |

| (W) = wässrige Phase: | |
|---|---|
| Entsalztes Wasser | 115,0 Gew.-Teile |
| Natriumsalz einer disproportionierten Abietinsäure | 2,6 Gew.-Teile |
| Natriumsalz eines Kondensationsproduktes aus Naphthalinsulfonsäure und Formaldehyd | 0,7 Gew.-Teile |
| Kaliumhydroxid | 1,0 Gew.-Teile |

| (A) = Aktivatorphase: | |
|---|---|
| 1 %ige wässrige Formamidinsulfinsäurelösung | 0,05 Gew.-Teile |

Bei einer Innentemperatur von 40°C springt die Reaktion leicht an. Durch eine Außenkühlung wird die freiwerdende Polymerisationswärme abgeführt und die Polymerisationstemperatur auf 45°C gehalten. Bei einem Monomerumsatz von 66 % wird die Reaktion durch Zugabe von Phenothiazin abgebrochen. Das restliche Monomere wird durch Wasserdampfdestillation aus dem Polymeren entfernt und der Polymerlatex durch Zusatz von Alginat aufgerahmt, wie in "Neoprene Latices, John C. Carl, E.I. Du Pont 1964, S.13" beschrieben.

Die Viskosität des Latex liegt bei 100 mPas, der Feststoffgehalt bei 58 %.

Nach einer Polymerisationszeit von 120 Stunden wird die Polymerisationsstraße ausgefahren.

### Beispiel 2 (erfindungsgemäßes Beispiel)

Man verfährt wie im 1. Beispiel, ersetzt jedoch in der wässrigen Phase die disproportionierte Abietinsäure durch eine gleiche Menge an unmodifizierter Harzsäure auf Tallölbasis.

Die Viskosität des Latex liegt bei 104 mPas, der Feststoffgehalt bei 58 %.

### Beispiel3 (Vergleichs beispiel)

Man verfährt wie im Beispiel 1 beschrieben, ersetzt jedoch die 7 Teile 2,3- Dichlorbutadien durch Chloropren und erhöht den Umsatz auf 85 %. Nach dem Aufrahmprozess erhält man eine Dispersion mit einem Feststoffgehalt von 56 % und einer Viskosität von 105 mPas. Das Polymer ist zu 60 % vergelt.

### Beispiel 4 (Vergleichsbeispiel)

Man polymerisiert wie in Beispiel 1 beschrieben, jedoch bei 10°C und ohne 2,3-Dichlorbutadien.

| (M) = Monomerphase: | |
|---|---|
| Chloropren | 100,0 Gew.-Teile |
| n-Dodecylmercaptan | 0,13 Gew.-Teile |
| Phenothiazin | 0,015 Gew.-Teile |

| (W) = wässrige Phase: | |
|---|---|
| Entsalztes Wasser | 115,0 Gew.-Teile |
| Natriumsalz einer disproportionierten Abietinsäure | 2,6 Gew. Teile |
| Natriumsalz eines Kondensationsproduktes aus Naphthalinsulfonsäure und Formaldehyd | 0,7 Gew. Teile |
| Kaliumhydroxid | 1,0 Gew. Teile |

| (A) = Aktivatorphase: | |
|---|---|
| 1 gew.-%ige wässrige Formamidinsulfinsäure | 0,07 Gew.-Teile |
| Kaliumpersulfat | 0,05 Gew.-Teile |
| Anthrachinon-2-sulfonsäure-Na | 0,005 Gew.-Teile |

Bei einer Innentemperatur von 15°C springt die Reaktion im 1. Kessel der Kaskade an. Durch eine Außenkühlung wird die freiwerdende Polymerisationswärme abgeführt und die Polymerisationstemperatur auf 10°C erniedrigt. Bei einem Monomerumsatz von 80 % wird die Reaktion durch Zugabe von Phenothiazin abgebrochen. Das restliche Monomere wird durch Wasserdampfdestillation aus dem Polymeren entfernt und der Polymerlatex aufgerahmt.

Nach einer Polymerisationszeit von 4 Tagen wird die Polymerisationsstrabe ausgefahren.

Man erhält eine Dispersion mit einem Feststoffgehalt von 56 % und-einer Viskosität von 98 mPas.

### B) Meßmethoden

### 1) Bestimmung des Gelgehaltes

Die Dispersion wird auf eine Glasplatte aufgetragen und 3 Tage bei Raumtemperatur unter eine Stickstoffatmosphäre zu einem Film getrocknet. 250 mg Probe werden in 25 ml THF (versetzt mit 1 g Polymerisationsinhibitor je Liter THF) 24 Stunden bei Raumtemperatur in einem abgeschlossenen Gefäß gelöst bzw. gequollen. Die Mischung wird 1 Stunde lang bei 20.000 Upm ultrazentrifugiert und der Gewichtsanteil des abzentrifugierten Materials nach Trocknung bestimmt.

### 2) Bestimmung der Schälfestigkeit

Die Prüfung erfolgt gemäß EN 1392.
Auf zwei Prüfkörper (Nora-Gummi, gerauht, 100 x 30 mm) wird ein 100 um dicker Nassfilm der Dispersion aufgetragen und 1 Stunde bei Raumtemperatur gelüftet. Anschließend werden die Prüflinge 10 Sekunden lang mit 4 bar zusammengefügt. Es erfolgt eine Reißprüfung auf einer handelsüblichen Zugprüfmaschine bei Raumtemperatur. Es werden die Festigkeitswerte sofort nach der Verklebung, nach 1 und 9 Tagen ermittelt.

### 3) Messung der Kontaktklebzeit auf Polyester ("offene Zeit")

Es wird Polyesterfolie (Hostaphan RN 75/0, Dicke : 0,075 mm.) vorgelegt und die Dispersionen mit einem Filmziehgerät bei einer Spaltöffnung des Rakels von 0,2 mm in einer Breite von 5 mm aufgetragen. Die mit der Klebstoff-Dispersion versehenen Polyesterstreifen werden in einem klimatisierten Raum bei 23°C und 50 % relativer Luftfeuchte gelagert. In Zeitabständen von 12 Stunden werden je zwei Kartonstreifen zueinander gekreuzt und 10 Sekunden mit einem 50 g Gewicht belastet. Das Ende der Kontaktklebzeit ist dann überschritten, wenn im Trennversuch von Hand keine Kontaktierbarkeit der Folien mehr vorhanden ist.

### C) Erfindungsgemäße Herstellung eines Klebstoffs auf Basis einer Polychloropren-Dispersion

Für die Herstellung der Formulierung wird die Polychloropren-Dispersion in einem Becherglas vorgelegt. Unter rühren werden der Stabilisator, das Alterungsschutzmittel, ZnO und das Harz zugegeben.

**Tabelle 1 Herstellung der Formulierung für die Vergleichsuntersuchungen**

| Produkt | Funktion | Zusatz als | Feststoff-gehalt (%) | Gewichtsteile |
|---|---|---|---|---|
| Polychloroprendispersion | Polymer | Dispersion | 55-58 | 70 |
| Rhenofit DDA-EM 50 (1) | Alterungsschutzmittel | Dispersion | 50 | 2 |
| Emulvin W (2) | Stabilisator | Solution | 20 | 2 |
| Akrosperse W-9804 (3) | ZnO | Dispersion | 50 | 4 |
| Alresen VPT 1550 (4) | Harz | Dispersion | 50 | 30 |

| | | | | |
|---|---|---|---|---|
| Bezugsquellen: (1), (2) = Bayer AG, (3) = Akrochem, Akron/Ohio USA, (4) = Vianova Resins Mainz-Kastel, Deutschland | | | | |

### Messung "Offene Zeit"

**Tabelle 2 Messung der Kontaktklebezeit auf Polyesterfolie**

| Kontaktklebzeit | 12 h | 24 h | 32 h | 3 d | 6 d | 9 d | 12 d | 24 | 25 d |
|---|---|---|---|---|---|---|---|---|---|
| Dispersion 4 | Ja | Nein | | | | | | | |
| Dispersion 3 | Ja | Ja | Nein | | | | | | |
| Dispersion 1 | Ja | Ja | Ja | Ja | Ja | Nein | | | |
| Dispersion 2 *) | Ja | Ja | Ja | Ja | Ja | Ja | Ja | Ja | Nein |

| | | | | | | | | | |
|---|---|---|---|---|---|---|---|---|---|
| *) erfindungsgemäßes Beispiel | | | | | | | | | |

### Messung der Schälfestigkeit

**Tabelle 3 Messung der Festigkeit von Schaum/Metall-Verklebungen abhängig von der offenen Zeit**

| (Verklebt wurde ein PU-Schaum auf Stahl ST37) | | | | | |
|---|---|---|---|---|---|
| **Dispersion Nr.** | | **4** | **3** | **1** | **2*)** |
| Lagerzeit vor der Verklebung in Std. | | | | | |
| 1 | N/mm | 0,8 | 1,0 | 0,5 | 0,7 |
| 12 | N/mm | 0,4 | 1,2 | 1,2 | 1,3 |
| 24 | N/mm | 0 | 0,8 | 0,9 | 1,3 |
| 96 | N/mm | 0 | 0,2 | 0,5 | 1,2 |
| 144 | N/mm | 0 | 0 | 0 | 1,2 |

| | | | | | |
|---|---|---|---|---|---|
| *) erfindungsgemäßes Beispiel | | | | | |

Die ungewöhnlich lange "offene Zeit" der erfindungsgemäßen Polychloropren Dispersion wird in Tab. 2 im Beispiel 2 demonstriert. Auch die Adhäsion an nichtsaugenden Substraten wie Stahl (Tab. 3, Nr. 2) ist im Vergleich zu Klebstoff-Formulierungen basierend auf anderen Polychloropren Dispersionen selbst nach 6 Tagen Lagerzeit noch ausgezeichnet.

### Beurteilung der Haftung auf TPO

Nach dem Auftrag der Klebstoff Dispersion wurde das Material 24 Std. bei RT getrocknet und die Haftung des Klebstofffilms auf dem TPO-Substrat (DOW Engage-Typ) überprüft.

**Tabelle 4 Messung der Adhäsion an TPO**

| **Dispersion Nr.** | **4** | **3** | **1** | **2*)** |
|---|---|---|---|---|
| | | | | |
| Beurteilung der Haftung auf TPO | Klebfilm trocken, lässt sich leicht vom Substrat abziehen | Klebfilm trocken, lässt sich leicht vom Substrat abziehen | Klebfilm klebrig, jedoch geringe Adhäsion zu TPO | Klebfilm klebrig, starke Adhäsion zu TPO |

Bei den Vergleichsversuchen 3 und 4 lässt sich der trockene Klebstofffilm problemlos vom TPO-Substrat abziehen (keine Adhäsion zu TPO). Beim Vergleichsversuch 1 zeigt der trockene Klebstofffilm eine leichte Adhäsion zum TPO-Substrat. Erst mit der erfindungsgemäßen Klebstoffzusammensetzung wurden Klebstofffilme erzeugt, die über eine ausgezeichnete Haftung verfügen. Beim Versuch den trockenen Klebstofffilm vom TPO abzuziehen, reißt der Klebstofffilm, da die Haftung auf TPO zu stark ist.

## Patentansprüche

1. Klebstoffzusammensetzungen auf Basis einer Polychloropren-Dispersion erhältlich durch Emulsionspolymerisation von Chloropren und 2 bis 20 Gew.-Teilen eines mit Chloropren copolymerisierbaren ethylenisch ungesättigten Monomeren in alkalischem Medium in Gegenwart von 1 bis 10 Gew.-Teilen einer unmodifizierten tricyclischen Diterpencarbonsäure mit mindestens zwei konjugierten C=C-Doppelbindungen pro Molekül, alle Angaben bezogen auf 100 Gew.-Teile beider Monomere.

2. Klebstoffzusammensetzung nach Anspruch 1 enthaltend 100 Gew.-Teile der Polychloroprendispersion, welche als Emulgator eine unmodifizierte tricyclische Diterpencarbonsäure mit mindestens zwei konjugierten C=C-Doppelbindungen pro Molekül enthält, 15 bis 75 Gew.-Teile eines Klebharzes, 1 bis 10 Teile eines Metalloxids, ausgewählt aus der Gruppe bestehend aus Zinkoxid und Magnesiumoxid sowie gegebenenfalls weitere Hilfs- und Zusatzstoffe.

3. Klebstoffzusammensetzungen nach Anspruch 1, **dadurch gekennzeichnet, dass** sie nach Verdampfen des Wassers eine "offene Zeit" im Bereich von 4 bis 15 Tagen aufweisen.

4. Klebstoffzusammensetzungen nach Anspruch 1, **dadurch gekennzeichnet, dass** als Klebharz ein Terpenphenolharz mit einem Erweichungspunkt über 110°C eingesetzt wird.

5. Verfahren zur Herstellung einer Klebstoffzusammensetzung durch Mischen einer Polychloropren-Dispersion erhältlich durch Emulsionspolymerisation von Chloropren und 2 bis 20 Gew.-Teilen eines mit Chloropren copolymerisierbaren ethylenisch ungesättigten Monomeren in alkalischem Medium in Gegenwart von 1 bis 10 Gew.-Teilen einer unmodifizierten tricyclischen Diterpencarbonsäure mit mindestens zwei konjugierten C=C-Doppelbindungen pro Molekül, alle Angaben bezogen auf 100 Gew.-Teile beider Monomere, mit den üblichen Klebstoffhilfs- und Zusatzmitteln.

6. Verfahren nach Anspruch 5, **dadurch gekennzeichnet, dass** es sich bei dem mit Chloropren copolymerisierbaren ethylenisch ungesättigten Monomeren um 2,3-Dichlorbutadien handelt.

7. Verwendung der Klebstoffzusammensetzung nach Anspruch 1 als Kontakthaftkleber für anorganische oder organische Substrate.

8. Kontakthaftkleber, enthaltend Klebstoffzusammensetzungen nach Anspruch 1.

9. Mit Klebstoffzusammensetzungen nach Anspruch 1 verklebte Substrate.

10. Substrate gemäß Anspruch 9, **dadurch gekennzeichnet, dass** diese Substrate als solche eine Oberflächenspannung kleiner als 35 mN/m aufweisen.

## Claims

1. Adhesive compositions based on a polychloroprene dispersion obtainable by emulsion polymerisation of chloroprene and from 2 to 20 parts by weight of an ethylenically unsaturated monomer copolymerisable with chloroprene, in an alkaline medium, in the presence of from 1 to 10 parts by weight of an unmodified tricyclic diterpenecarboxylic acid having at least two conjugated C=C double bonds per molecule, all amounts being based on 100 parts by weight of the two monomers.

2. Adhesive composition according to claim 1, containing 100 parts by weight of the polychloroprene dispersion containing as emulsifier an unmodified tricyclic diterpenecarboxylic acid having at least two conjugated C=C double bonds per molecule, from 15 to 75 parts by weight of an adhesive resin, from 1 to 10 parts of a metal oxide selected from the group consisting of zinc oxide and magnesium oxide, and, optionally, further auxiliary substances and additives.

3. Adhesive compositions according to claim 1, **characterised in that** they have an "open time" after evaporation of the water in the range from 4 to 15 days.

4. Adhesive compositions according to claim 1, **characterised in that** a terpenephenol resin having a softening point above 110°C is used as the adhesive resin.

5. Process for the preparation of an adhesive composition by mixing a polychloroprene dispersion obtainable by emulsion polymerisation of chloroprene and from 2 to 20 parts by weight of an ethylenically unsaturated monomer copolymerisable with chloroprene, in an alkaline medium, in the presence of from 1 to 10 parts by weight of an unmodified tricyclic diterpenecarboxylic acid having at least two conjugated C=C double bonds per molecule, all amounts being based on 100 parts by weight of the two monomers, with conventional additives and auxiliary substances for adhesives.

6. Process according to claim 5, **characterised in that** the ethylenically unsaturated monomer copolymerisable with chloroprene is 2,3-dichlorobutadiene.

7. Use of the adhesive composition according to claim 1 as a contact adhesive for inorganic or organic substrates.

8. Contact adhesive containing adhesive compositions according to claim 1.

9. Substrates bonded with adhesive compositions according to claim 1.

10. Substrates according to claim 9, **characterised in that** the substrates as such have a surface tension of less than 35 mN/m.

## Revendications

1. Compositions d'adhésif à base d'une dispersion de polychloroprène disponible par polymérisation en suspension de chloroprène et 2 à 20 parties en poids d'un monomère à insaturation éthylénique copolymérisable avec le chloroprène en milieu alcalin en présence de 1 à 10 parties en poids d'un acide carboxylique diterpénique tricyclique non modifié avec au moins deux doubles liaisons conjuguées C=C par molécule, toutes les indications étant rapportées à 100 parties en poids des deux monomères.

2. Composition d'adhésif suivant la revendication 1 contenant 100 parties en poids de la dispersion de polychloroprène, laquelle contient comme émulsifiant un acide carboxylique diterpénique tricyclique non modifié avec au moins deux doubles liaisons C=C conjuguées par molécule, 15 à 75 parties en poids d'une résine adhésive, 1 à 10 parties d'un oxyde métallique, sélectionné parmi le groupe constitué de l'oxyde de zinc et de l'oxyde de magnésium ainsi que le cas échéant d'autres substances auxiliaires et additifs.

3. Compositions d'adhésif suivant la revendication 1, **caractérisées en ce qu'**elles présentent après l'évaporation de l'eau un "temps ouvert" de l'ordre de 4 à 15 jours.

4. Compositions d'adhésif suivant la revendication 1, **caractérisées en ce qu'**on utilise comme résine adhésive une résine phénolique terpénique avec un point de ramollissement supérieur à 110°C.

5. Procédé de fabrication d'une composition d'adhésif par mélange d'une dispersion de polychloroprène disponible par polymérisation en émulsion de chloroprène et de 2 à 20 parties en poids d'un monomère à insaturation éthylénique copolymérisable avec le chloroprène en milieu alcalin en présence de 1 à 10 parties en poids d'un acide carboxylique diterpénique tricyclique non modifié avec au moins deux doubles liaisons conjuguées C=C par molécule, toutes les indications étant rapportées à 100 parties en poids des deux monomères, avec les substances auxiliaires et additifs pour adhésif habituels.

6. Procédé suivant la revendication 5, **caractérisé en ce que** le monomère à insaturation éthylénique copolymérisable avec le chloroprène est du 2,3-dichlorobutadiène.

7. Utilisation de la composition d'adhésif suivant la revendication 1 comme colle de contact pour des substrats inorganiques ou organiques.

8. Colle de contact contenant les compositions d'adhésif suivant la revendication 1.

9. Substrats collés avec les compositions d'adhésif suivant la revendication 1.

10. Substrats suivant la revendication 9, **caractérisés en ce que** ces substrats présentent en tant que tels une tension superficielle inférieure à 35 mN/m.
